# EUROPEAN PATENT APPLICATION

(11) **EP 2 890 085 A1**
(43) Date of publication of application: **01.07.2015**
(21) Application number: 13306898.1
(22) Date of filing: 30.12.2013
(51) Int. Cl.: H04L 29/08

(54) **Methods of digital content storage management and corresponding devices**

(71) Applicant: Thomson Licensing, 92130 Issy-les-Moulineaux (FR)
(72) Inventor: Picconi, Fabio, 92443 Issy-Les-Moulineaux (FR); Soule, Augustin, 92443 Issy-Les-Moulineaux (FR)
(74) Representative: Le Dantec, Claude

(57) **Abstract**

The present invention generally relates to a method of digital content storage management implemented in a first server. The method comprises:
- starting reception (401) of a digital content from a first device and starting storage of the digital content;
- associating (402) the digital content with a resource identifier before an end of storage of the digital content;
- sending (403) the resource identifier to the first device before the end (404) of reception and storage of the digital content, so that the digital content may be requested from the first server;

The invention also relates to a method implemented in a sending device and corresponding management device and sending device

## Description

### 1. Field of invention.

The present invention generally relates to optimization of data transfer, and in particular allows optimizing delivery of data from a device in a local area network to any other device in a network.

### 2. Technical background

It is increasingly common for today's users to gather large quantities of digital data, for example in the form of photos, videos, and documents. To ensure against data loss for any reason, Internet providers have proposed online data storage services. Due to limited bandwidth available to a user uploading of huge quantities of data, online data storage remains a time-consuming and tedious task. In addition, when the data needs to be shared, the data is not quickly available to other users.

There is thus a need for optimization of the data transfer process in order to make data available to any user, quicker.

### 3. Invention summary

The present invention proposes to alleviate some of the inconveniences of prior art by making a relatively quick access of digital content initially stored on a device connected to a remote server.

To this aim, a method of digital content storage management implemented in a first server comprises:
- starting reception of a digital content from a first device and starting storage of the digital content;
- associating the digital content with a resource identifier before an end of storage of the digital content;
- sending the resource identifier to the first device before the end of reception and storage of the digital content, so that the digital content may be requested from the first server.

The first device is for example, a source device including or linked to a memory comprising the digital content; in another embodiment, the first device is, for example, a gateway associated with a source device, the gateway belonging to a same local area network than the source device or being linked to the source device.

According to an embodiment, the method comprises:
- receiving a request from a second device to transfer the digital content associated with the resource identifier, the request being received before an end of storage of the digital content;
- sending the digital content to the second device, the sending starting before the end of storage of the digital content.

The second device is, for example, another device in a same network than the first device or in another network.

According to an embodiment, the method comprises:
- receiving a request from a third device to transfer the digital content associated with the resource identifier, the request being received before an end of storage of the digital content;
- checking if the third device belongs to a same local area network as the first device;
- if the third device belongs to a same local area network as the first device,
   - then the first server redirects the request to the first device or indicates that the digital content is present on the same local area network;
   - otherwise the first server sends the digital content to the third device, the sending starting before the end of storage of the digital content.

According to an embodiment, the first server checks IP addresses of the first device and the third device, the first device and the third device being considered as belonging to a same local area network if they have the same IP addresses or if their IP addresses share a common prefix.

According to an embodiment, the method comprises:
- starting reception of the digital content from the first device;
- forwarding the digital content to a second server;
- receiving a second resource identifier associated with the second server;
- receiving a request from a fourth device to transfer the digital content associated with the resource identifier, the request being received before an end of storage of the digital content;
- checking if the fourth device belongs to a same autonomous system than the second server;
- if the fourth device belongs to the same autonomous system as the second server, then the first server redirects the request to the second server.

Exemplarily, the first and second servers are in different networks. The fourth device is, for example, a device in a same network than the second server.

According to another of its aspects, the invention relates to a method of digital content storage management implemented in a first device in a network, the method comprising :
- starting sending a digital content to a remote server;
- receiving a resource identifier associated with the digital content before an end of sending of the digital content.

According to an embodiment, the first device forwards the resource identifier to at least a second device of the network.

According to an embodiment, the first device:
- receives a request of the digital content from a requesting device in the local network;
- sends the digital content to the requesting device without forwarding the request to the remote server.

According to another of its aspects, the invention relates to a management device configured to manage a digital content storage and to:
- start reception of a digital content from a first device and start storage of the digital content;
- associate the digital content with a resource identifier before an end of storage of the digital content;
- send the resource identifier to the first device before the end of reception and storage of a digital content, so that the digital content may be requested.

According to an embodiment, the management device is configured to:
- receive a request from a second device to transfer the digital content associated with the resource identifier, the request being received before an end of storage of the digital content;
- send the digital content to the second device, the sending starting before the end of storage of the digital content.

The second device is, for example, another device in an external network.

According to an embodiment, the management device is configured to:
- receive a request from a third device to transfer the digital content associated with the resource identifier, the request being received before an end of storage of the digital content;
- check if the third device belongs to a same local area network as the first device;
- if the third device belongs to a same local area network as the first device,
   - then the management device redirects the request to the first device or indicates that the digital content is present on the same local area network;
   - otherwise the management device sends the digital content to the third device, the sending starting before the end of storage of the digital content.

According to an embodiment, the management device is configured to check IP addresses of the first device and third device, the first device and the third device being considered as belonging to a same local area network if they have the same IP addresses or if their IP addresses share a common prefix.

According to an embodiment, the management device is configured to
- start reception of the digital content from the first device;
- forward the digital content to a second server;
- receive a second resource identifier associated with the second server;
- receive a request from a fourth device to transfer the digital content associated with the resource identifier, the request being received before an end of storage of the digital content;
- check if the fourth device belongs to a same autonomous system than the second server;
- redirect the request to the second server if the fourth device belongs to the same autonomous system than the second server.

According to another of its aspects, the invention relates to a sending device comprising a network interface and configured to:
- start sending a digital content to a remote server;
- receive a resource identifier associated with the digital content before an end of sending of the digital content.

According to an embodiment, the sending device is configured to forward the resource identifier to at least a second device through the network interface.

According to an embodiment, the sending device is configured to:
- receive a request of the digital content from a requesting device of a local network;
- send the digital content to the requesting device without forwarding the request to the remote server.

According to an embodiment, the sending device is gateway or it includes a proxy.

### 4. List of figures

More advantages of the invention will appear through the description of particular, non-restricting embodiments of the invention, illustrated or not by means of the accompanying drawings. The description refers to the appended drawings in which:
- Figure 1 represents an example of a communication network in which one or more embodiments may be implemented;
- Figure 2 represents an exemplary architecture of a sending device (e.g. a source device or gateway) in the network represented in figure 1, according to a specific embodiment of the invention;
- Figure 3 represents an exemplary architecture of a server in the network represented in figure 1, according to a specific embodiment of the invention;
- Figure 4 represents digital content storage management implemented in a sending device (e.g. source device or gateway) of figure 1;
- Figure 5 represents digital content storage management implemented in the server of figure 3;
- Figures 6 to 8 illustrate examples of communication exchanges between different elements of the network of figure 1, including a sending device (e.g. source device or gateway) of figure 1 and server of figure 3; and
- Figure 9 illustrates a functional diagram of a server in the network represented in figure 1, according to a specific embodiment of the invention.

### 5. Detailed description of the invention

The present invention enables relatively quick access of a digital content, initially stored on a source device connected to a first server (e.g. a remote server) to be provided by allowing the forwarding of the digital content, even when it has not been completely uploaded to the first server. The first server assigns a resource identifier to the digital content and forwards it to at least a device. As used herein the term resource identifier for a digital content signifies an identifier uniquely identifying the digital content stored on a specific device or server (here to the first server). Any device may request a download of the digital content from the first server. According to prior art, a remote device needs to wait until the end of the upload before requesting a download of the digital content from the first server. According to a specific variant of the invention, quicker access to a digital content is enabled according to the relative localization of device requesting the content. E.g. if a device belonging to a same local area network as the source device requests the digital content to the first server, the request is redirected to a device of the local area network (e.g. a gateway). This is particularly advantageous, when the link between the source device and the first server is slow and/or the digital content is large (e.g audio or video contents). E.g. if the first server has started to forward the digital content to a second server and if a device belonging to a network associated with the second server requests the digital content to the first server, in a specific embodiment, the request is redirected by the first server to another point, e.g. to a storage unit associated with the second server. Thus, the source device opens a direct connection to the content server. These connections can be made using either plain text or ciphered (SSL) HTTP connection.

The present invention will be described more fully hereinafter with reference to the accompanying figures, in which embodiments of the invention are shown. This invention may, however, be embodied in many alternate forms and should not be construed as limited to the embodiments set forth herein. Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the invention. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

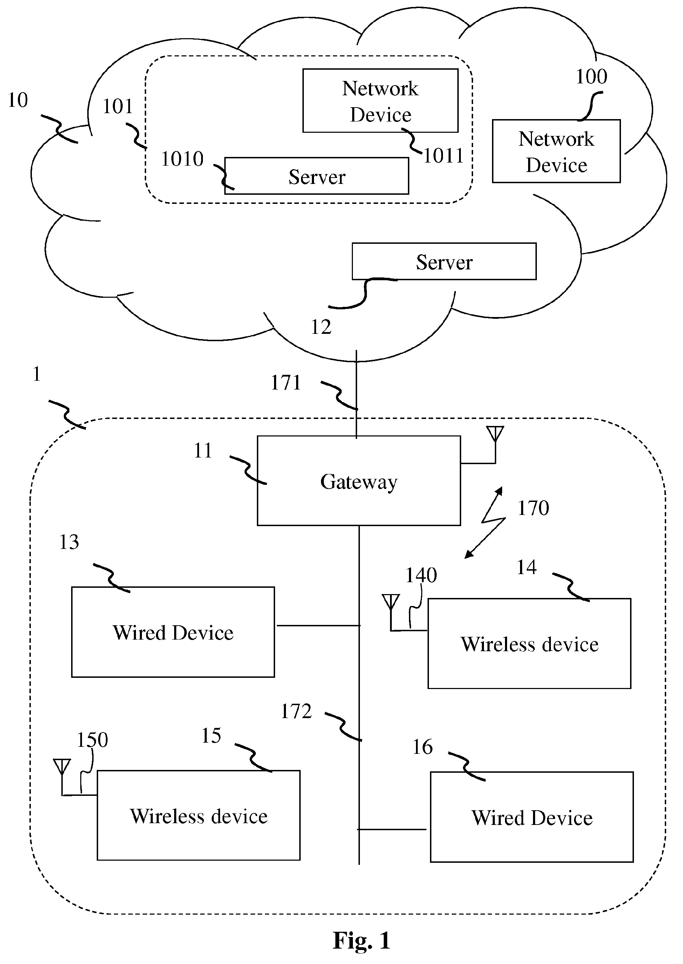

**Figure 1** represents a typical environment in which one or more embodiments of the invention implemented; the environment comprises a home network (HN) or Local Area Network (or LAN) 1, an external network 10 including an online storage.

The external network 10 comprises, among several others, a server 12, a subnetwork 101, a device 100, which is outside the sub-network 101. The sub-network 101 comprises a server 1010 and a device 1011. According t a variant of the invention, each element of the sub-network 101 has a same AS (Autonomous System). For example, a same AS is assigned to all elements of an operator network, whereas a network from another operator has a different AS. According to a variant, the sub-network corresponds to devices associated with a list of identified IP (Internet Protocol) addresses and/or prefixes of IP addresses. This list is for example registered in a file.

The network 1 comprises a gateway 11 compliant with embodiments of the invention and that is connected to the external network 10 through a communication link 171, that is wireless (e.g. mobile network, WiFi...) and/or wired (e.g. internet or broadband network) according to various possible implementations. The network 1 also comprises devices connected to the gateway 11 through a wireless link 170 (e.g. of WiFi type) or wired link 172 (e.g. of Ethernet type); these devices include mobile terminal 14 and 15, for example laptops, mobile phones and tablets (fitted each with a antenna respectively 140 and 150 for communication with the wireless link) and to fixed terminals 13 and 16 such as set top boxes or desktops. The devices 13 to 16 are adapted to receive miscellaneous flows (e.g audio, video flows) from the gateway 10.

In the network 1, data communication speeds are adapted to audio/video transmission, typically greater than 2 Mbit/s for the wireless network, and greater than 100Mbit/s for the wired network.

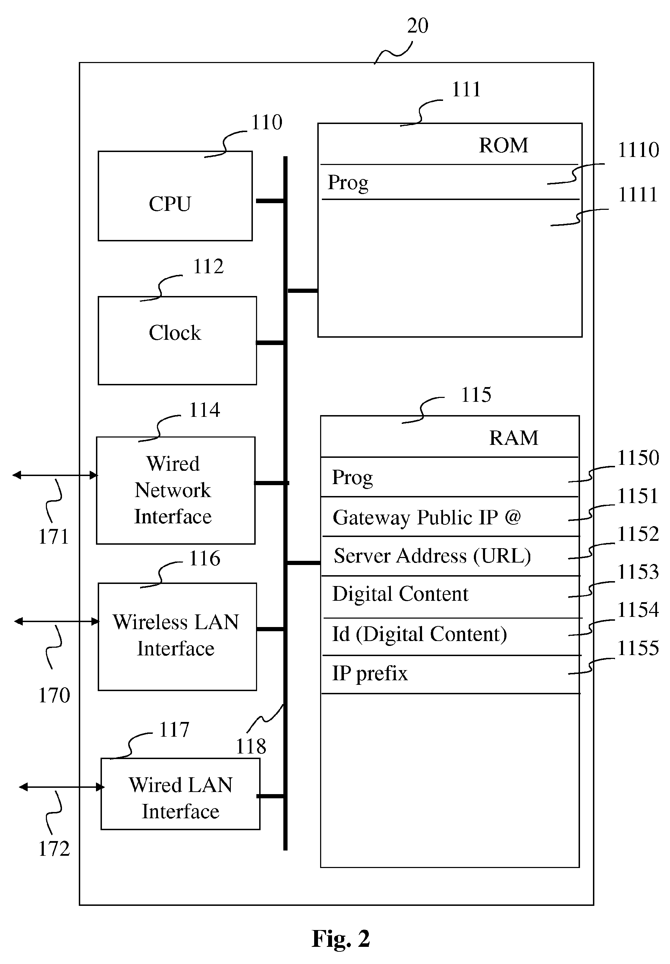

**Figure 2** shows an implementation of a sending device 20 (e.g. a source device 13 to 16 or gateway 11) according to an embodiment of the invention. The gateway 11 comprises the following elements:
- a central processing unit 110 or CPU;
- a clock unit 112;
- an interface 114 for connection to the link 171 with the external network 10;
- a wireless interface 116 for connection to the wireless link 170;
- a wired interface 117 for connection to the wired link 172 of network 1;
- a non-volatile memory ROM 111; and
- a volatile memory RAM 115.

It is noted that the word *"register"* used in the description of the memories 111 and 115 designates in each of the memories mentioned, a memory zone of low capacity (some binary data) as well as a memory zone of large capacity (enabling a whole program to be stored or all or, for example, all or part of the digital content stored on a device).

The ROM memory 111 notably comprises a *"prog"* program 1110. The algorithms implementing the steps of the method specific to the invention and described below are stored in the memory ROM 111 associated with the sending device 20 implementing these steps, and more specifically in program 1110. When powered up, the microprocessor 110 loads in RAM 115 and runs the instructions of these algorithms.

The random access memory 115 notably comprises in registers:
- the loaded *"prog"* program 1150;
- a gateway IP address 1151;
- a server address (URL) 1152;
- a digital content 1153;
- an identifier associated with the digital content 1154; and
- an IP prefix 1155, corresponding to IP addresses used by nodes of network 1.

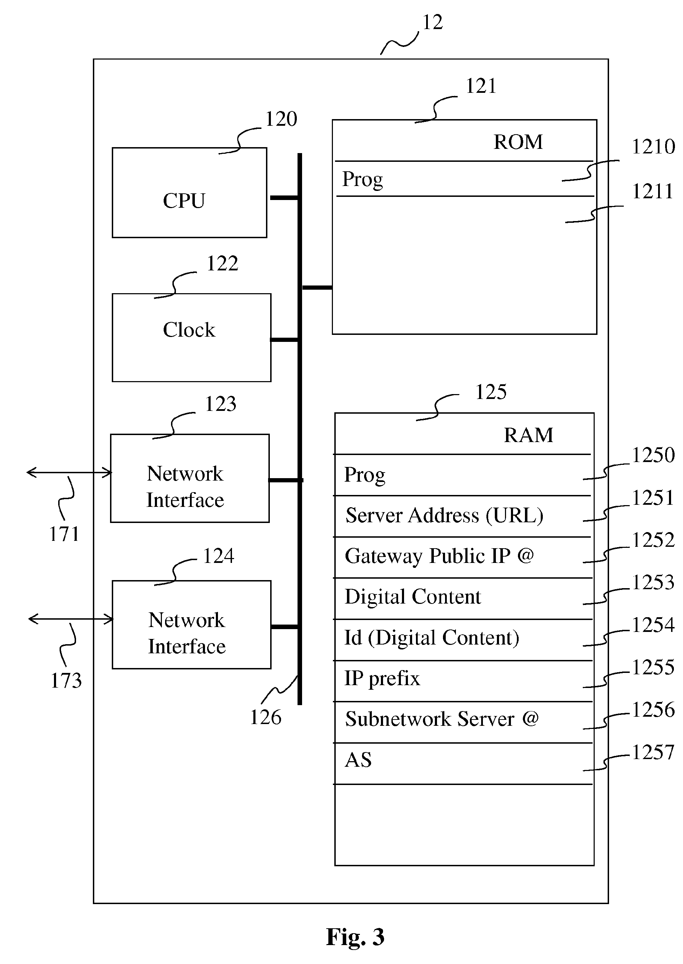

**Figure 3** shows an implementation of the server 12 according to an embodiment of the invention. The server 12 comprises the following elements:
- a central processing unit 120 or CPU;
- a clock unit 122;
- an interface 123 for connection to the link 171 with the network 1;
- an interface 124 for connection to other elements of the network 10;
- a non-volatile memory ROM 121; and
- a volatile memory RAM 125.

It is noted that the word *"register"* used in the description of the memories 121 and 125 designates in each of the memories mentioned, a memory zone of low capacity (some binary data) as well as a memory zone of large capacity (enabling a whole program to be stored or all or, for example, all or part of the digital content to store).

The ROM memory 121 notably comprises a *"prog"* program 1210. The algorithms implementing the steps of the method specific to the invention and described below are stored in the memory ROM 121 associated with the server 12 implementing these steps, and more specifically in program 1210. When powered up, the microprocessor 120 loads in RAM 125 and runs the instructions of these algorithms.

The random access memory 125 notably comprises in registers:
- the loaded *"prog"* program 1250;
- an address (URL) 1251 of server 12;
- an IP address 1252 of gateway 11;
- a digital content 1253;
- an identifier associated with the digital content 1254;
- an IP prefix 1255, corresponding to IP addresses used by nodes of network 1; and
- an address 1256 of server 1010 in sub-network 101; and
- an AS 1257 used by elements of sub-network 101.

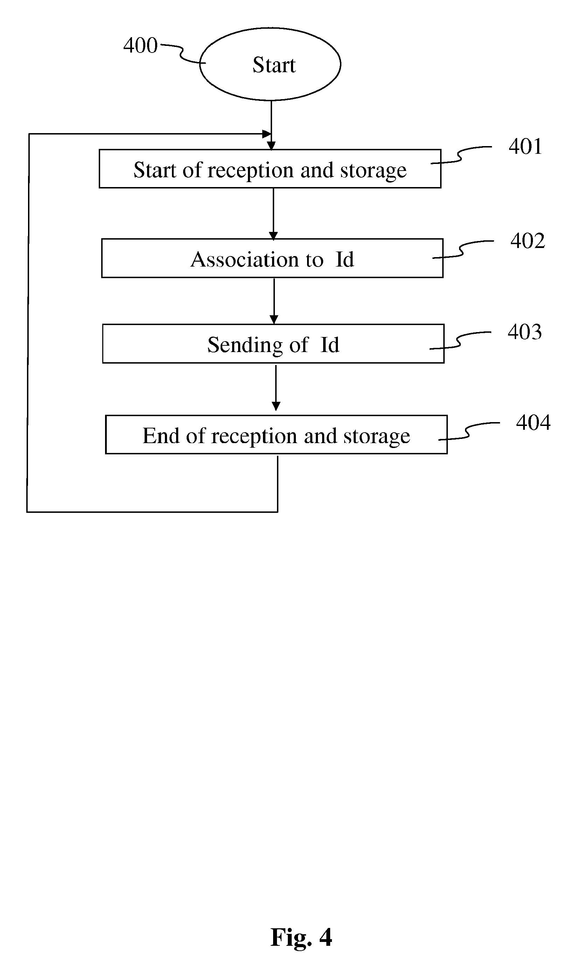

**Figure 4** schematically illustrates digital content storage management implemented in the server 12. In specific embodiments, the server 12 is able to manage various contents that are received by different devices and with different formats (e.g. IPTV or web video or web audio).

During a first step 400, the server 12 initializes its various components and variables.

Then, during a step 401, the server 12 starts a reception of a digital content (e.g. a video file) from a first device (e.g. from the gateway 11 or any other network element) and storage of the digital content.

Then, during a step 402, the server 12 associates the digital content with a unique identifier of resource (i.e. an identifier that uniquely identifies the digital content stored by the server 12, e.g. url or uri) before an end of storage of the digital content.

For example the server 12 generates a pseudo random string, or uses a sequential number (that has not yet been used as a resource identifier) and associates it with the uploaded content. This pseudo random string is then an identifier that uniquely identifies the resource. A resource can have multiple identifiers; however, a unique identifier is associated with one and only one resource.

In an embodiment, the association is done by storing the identifier and the resource in an association table of a database.

The URI includes the address of the server and the unique resource identifier. For instance in the URI http://www.example.net/XYZ123, the server address is www.example.net and the unique identifier on this server is XYZ123; in other embodiments of the invention, the unique identifier includes the server address.

Then, during a step 403, the server 12 sends the unique identifier to the first device before the end of reception and storage of the digital content, so that the digital content may be requested (before the end of reception and storage). The first device is for example, the gateway 11, the source of digital content or another server. According to a variant of the invention, the unique identifier is also sent to one or other devices in the networks 10 and/or 1.

The reception and storage of digital content ends in step 404 and step 401 is reiterated.

According to embodiments of the invention, a requesting device may access or download the digital content as soon as the requesting device has received a resource identifier from the server 12, the first device or any other device; when the server 12 receives a download request from the requesting device, it can start the download even if the server 12 has not completely finished to store the content; according to a variant, the server 12 redirects the request, for example, if the requesting device belongs to a network or sub-network where the digital content is stored (e.g. local area network of the source or gateway that have sent the content to the server 12 or network of requester associated with an operator that is different to the operator of network 12). In an embodiment, a local device (i.e. a device belonging to a same network than the first device) requests a digital content using the unique resource identifier to the server 12; the server 12 identifies an address of location of the digital content (e.g. the IP address of a gateway) and redirects the request to this location (e.g. the gateway).

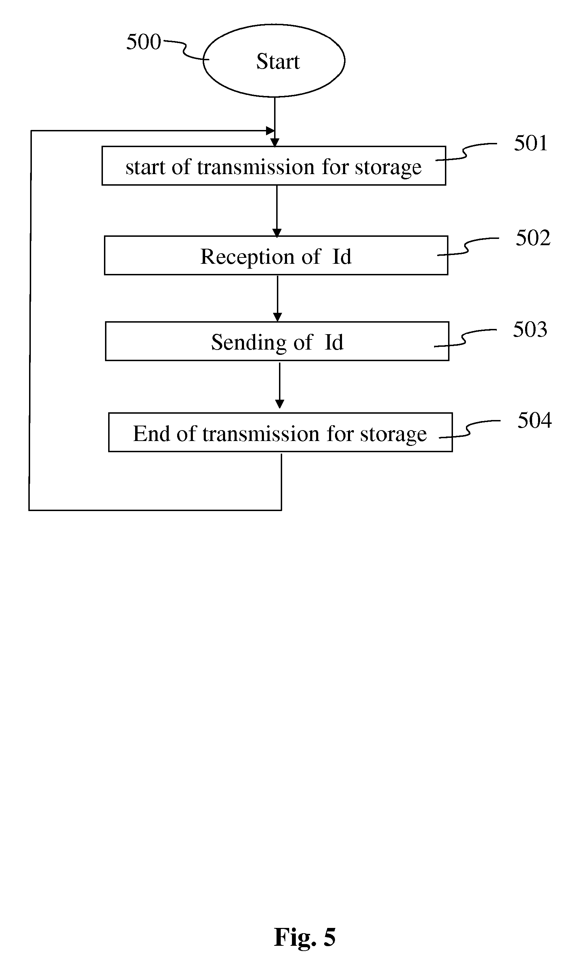

**Figure 5** schematically illustrates digital content storage management implemented in a first device (typically a sending device 20 as illustrated in figure 2), e.g. the gateway 11 or source of digital content. According to specific embodiments, the first device is able to manage various contents with a same or different formats (e.g. IPTV or web video). The sending device is adapted to receive digital content from different devices and to forward it to a remote server and, according to a variant of the invention, to a local device (i.e. belonging to the local network 1 of sending device 20).

During a first step 500, the first device initializes its various components and variables.

Then, during a step 501, the first device starts transmission of a digital content (e.g. an audio or video file) to the server 12.

Then, during a step 502, the first device receives a unique resource identifier (e.g. url or uri) from the server 12 before an end of transmission of the digital content.

Then, during a step 503, the first device ends transmission of the digital content. Then, step 501 is reiterated.

According to a variant of the invention, after step 502, the first device forwards the unique resource identifier one or several devices of the local network 1.

According to a variant of the invention, after steps 502 or 503, the first device receives a request of the digital content from a requesting device of the local network 1 and sends the digital content to the requesting device without forwarding the request to the server 12. This enables a quicker upload of the digital content to local devices and/or save of bandwidth and resources associated with the network 10.

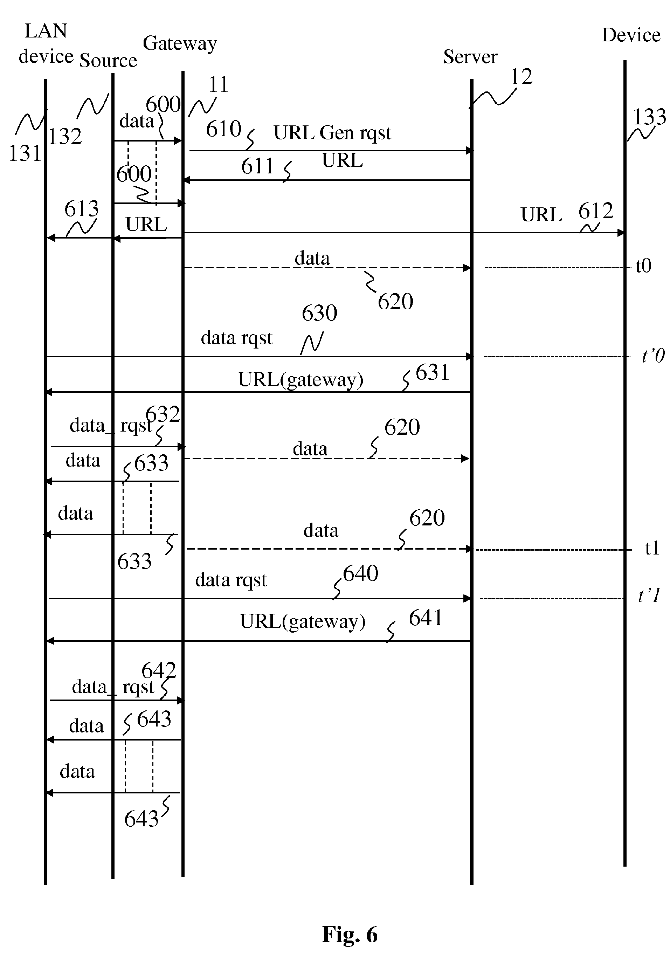

**Figure 6** illustrates examples of communication exchanges between different elements of the network of figure 1, including the gateway 11, the server 12, a source device 132 (that is any device of network 1, except the gateway), a LAN device 131 (that is any device of network 1, except the gateway and the source 132) and a device 133 (that could be any device adapted to request data to the server 12).

In particular, figure 6 illustrates data storage to the server 12 and request of data from a device of local network 1 and more specifically, embodiments of methods of digital content storage management implemented in a server or in a sending device. As shown hereafter, in some embodiments of the invention, a digital content is uploaded from the gateway 12 when it is requested by a device of local network 1. This usually enables save of bandwidth between the networks 1 and 10 and a quicker upload of digital content (also referred as data hereafter).

First, data 600 is transferred from the source 132 to the gateway 11 during a duration depending of the amount of data to transfer and bandwidth of link between the source and the gateway. For example, the sending is done with one http put connection sent over multiple TCP/IP packets 600 from the source 132 to the gateway 11. The source 132 is for example a box generating audio/video or image files.

Before the end of transfer of data 600, the gateway 11 is requesting an URL to the server, e.g. in a *URL_Gen_Request* 610 using an http get connection.

The server 12 provides a URL 611 to the gateway 11; then, the gateway 613 forwards the URL 611 in a message 613 to devices of network 1 and in a message 612 to remote devices of network 10 using an http put connection per device.

At time *t0,* the gateway 11 starts sending of data 600 to the server 12 in a data flow 620 (video file, set of pictures,...). The sending of data flow 620 ends at time *t1.* The server 12 stores received data during reception of data, so that stored data is available for devices requesting the corresponding digital content.

Then, at time *t'0* between *t0* and *t1,* the LAN device 131 requests data (using an HTTP GET, HTTP POST, FTP GET, ...) that is associated with URL 611 received in message 613 and corresponding to server 12. This corresponds to a request *Data-Request* 630.

In example of figure 6, the server 12 identifies that the request 630 is coming from the same local network 131 as gateway 11. In a first implementation, the server 12 has previously got a list of IP addresses of devices belonging to the network 131 and checks if the IP address of the sender of the request is among this list. According to a variant, the server 12 checks if an IP prefix address is the same as the IP prefix address of gateway 11. The IP prefix is IP prefix as defined in IP v6 standard specification or a given number 16 of most significant bits in older IP standard specification or as defined by the Internet Routing Registry,. The IP address is, for example, an IP address of residential network for IP v4 standard specifications.

Then, the server 12 sends back the URL of the gateway 12 to the device 131 in a message 631.

Then, the device 131 is using the URL of message 631 to request the data in a message *Data_Request* 632 sent to the gateway 11.

Then, the gateway 11 forwards locally stored data to the device 131 in a data flow 633.

At a time *t'1* after time *t1,* the device 131 requests data that is associated with URL 611 received in message 613 and corresponding with server 12. This corresponds to a request *Data-Request* 640. This request is processed in a similar way to request 630: after identification by the server 12 of a device 131 belonging to the same local network 1 as gateway 11, the server 12 redirects the request to the device 131; for example, the server 12 sends back the URL of the gateway 12 to the device 131 in a message 641.

In a variant, the server 12 indicates to the device 131 that the digital content is present on the local area network of the device 131 (e.g. the gateway 12 or the source).

Then, the device 131 is using the URL of message 641 to request the data in a message *Data_Request* 642 sent to the gateway 11. This embodiment enables an optimization of resources (e.g. use of digital content stored on the LAN of device 131 to reduce data exchanges between LAN and remote server 12), digital content being advantageously exchanged within a same autonomous system.

Then, the Gateway 11 forward locally stored data to the device 13 in a data flow 643.

According to a variant of the invention, the server 12 does not check if a device belongs to the same network as the gateway 11 and forwards data to requesting device.

According to a variant of the invention, the gateway 12 sends its own URL in message 613 indicating URL to use to upload the digital content, the message 613 being sent to one, several or all devices of local network 1. The devices of local network are then using the URL of gateway to upload the digital content instead of URL of server 12.

According to a variant of the invention, a device of local network first connects to the gateway 11 to request the digital content; if the gateway 11 has the requested content, it forward it to the device; else, the gateway either forwards the request to the server 12 or sends back a message indicating that the gateway cannot provide the digital content.

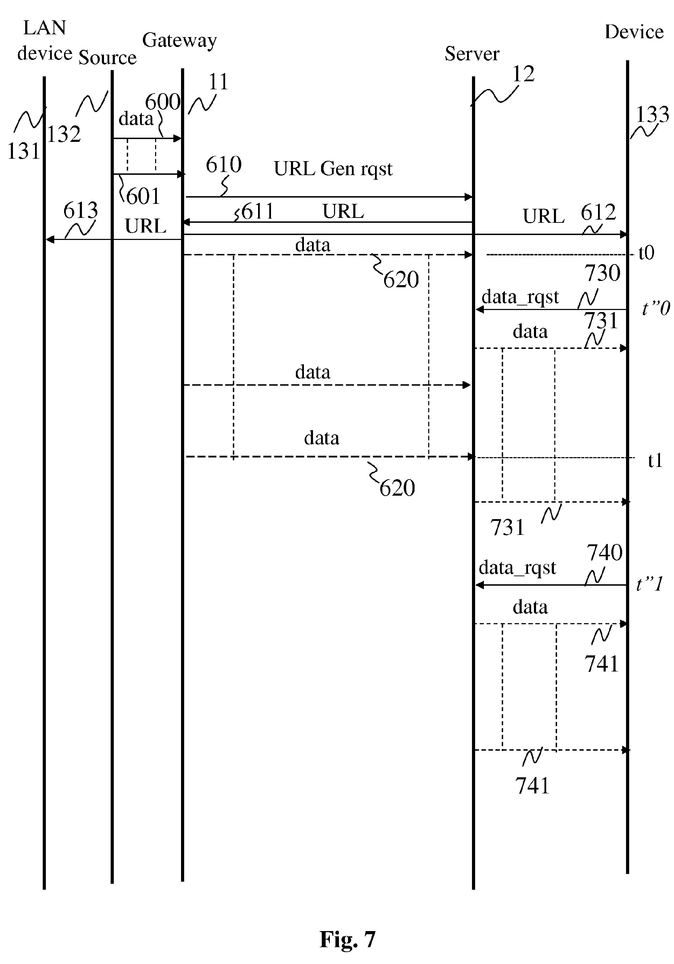

**Figure 7** illustrates examples of communication exchanges between different elements of the network of figure 1, similarly to Figure 6. In particular, Figure 7 illustrates data storage to the server 12 and request of data from a device of network 10, and more specifically, different embodiments of management methods.

Communication exchanges corresponding to data flows 600 and 620, and to messages 610 to 613 are similar to communication exchanges illustrated in Figure 6.

After reception of message 612, at a time *t"0* between *t0* and *t1,* the device 133 is using the URL of message 612 to request the data in a message *Data_Request* 730 sent to the server 12.

Then, the server 12 forwards stored data to the device 133 in a data flow 731. According to a variant of the invention, the server sends data to device 133 after check by the server 12 that the device 133 does not belong to the same local network 1 as gateway 11. According to this variant, if the device 133 belongs to the local network 1, the server 12 redirects the requests to the gateway 11 or indicates to the requesting device that the digital content can be requested to the gateway 11.

At a time *t"1* after time *t1,* the device 133 requests data that is associated with URL 611 received in message 612 and corresponding to server 12. This corresponds to a request *Data-Request* 740. This request is processed in a similar way to request 730: after check by the server 12 that the device 133 does not belong to the same local network 1 as gateway 11, the server forward locally stored data to the device 133 in a data flow 741.

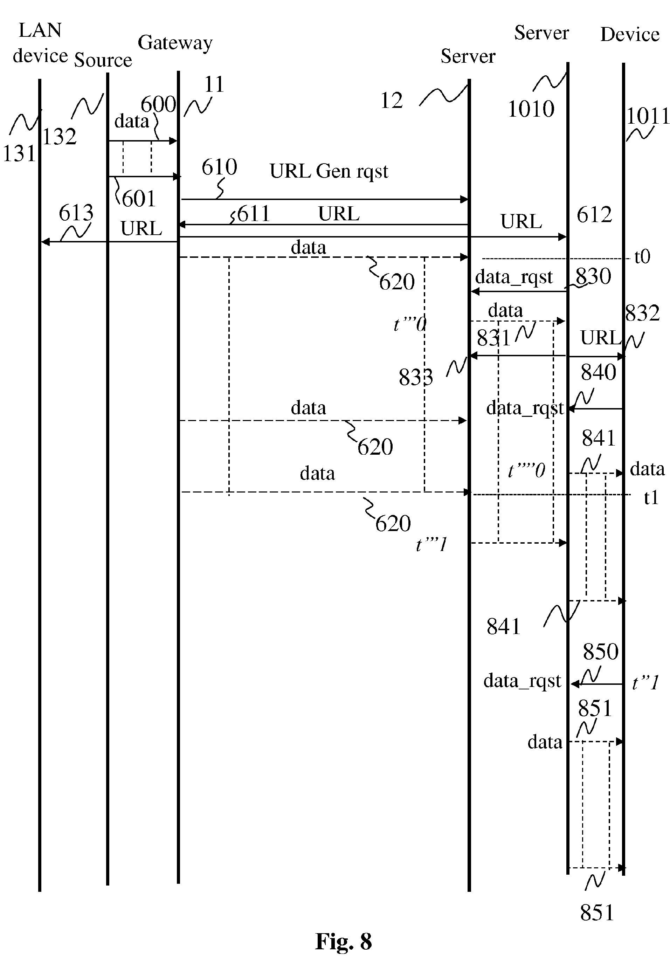

**Figure 8** illustrates examples of communication exchanges between different elements of the network of figure 1 similarly to Figure 6, server 1010 and network device 1111. In particular, Figure 8 illustrates data storage to the server 12 and use of server 1010 to store the digital content; this digital content can later be requested to the server 1010 by a device 1011 of subnetwork 101.

In particular, the communication exchanges of figure 8 corresponds to a specific embodiment of the method of digital content storage management. According to this embodiment, the server 12:
- starts reception of the digital content from the first device;
- forwards the digital content to a second server 1010;
- receives from server 1010, a second resource identifier associated with the server 1010, the second resource identifier uniquely identifying the digital content stored on server 1010.

According to a variant of this specific embodiment, the server 12:
- receives a request from a device 1011 (device in same network than server 1010) to transfer the digital content associated with the second resource identifier, the request being received before an end of storage of the digital content; and
- checks if this request belongs to a same autonomous system than the second server; if the requesting device belongs to the same autonomous system than the server 1010, then the server 12 redirects the request to the 1010 server; else the server 12 sends requested digital content to the requesting device.

This embodiment enables an optimization of resources (e.g. reduction of data transfer between different autonomous systems), digital content being advantageously exchanged within a same autonomous system.

Communication exchanges corresponding to data flows 600 and 620, and to messages 610 to 613 are similar to communication exchanges illustrated in Figure 6.

After the server 1010 receives the message 612, the server requests data to the server 12 in a request 830.

Then, the server 12 starts forwarding data to the server 1010 at a time *t"'0* between *t0* and *t1* in a data flow 831; the server 1010 stores the received data; the server 1010 also associates this stored data with a second resource identifier (i.e. an identifier that specifically identifies the digital content stored by the server 1010).

According to a specific embodiment, the server 1010 implements the invention, in a similar way to the server 12; if so, the server 1010 forwards a message 832 including the second resource identifier of the digital content before an end of storage of the digital content, to one, several devices of sub-network 101 (e.g. device 1011). According to a variant of invention, the server 1010 also sends the second resource identifier in a message 833 to the server 12; after reception of message 833, the server 12 refers to the second resource identifier to redirect request of digital content from devices of sub-network 101 to the server 1011. Then, the server 12 can redirect to server 1010 any request coming from a device belonging to the a same autonomous system than the second server 1010.

After reception of message 832, at a time *t"'0* between *t0* and *t1,* the device 1011 is using the URL of message 832 to request the data in a message *Data_Request* 840 sent to the server 1010.

Then, the server 1010 forwards stored data to the device 1011 in a data flow 841.

At a time *t*"*1* after time *t1,* the device 1011 requests data that is associated with URL received in message 832 and corresponding to server 1010. This corresponds to a request *Data-Request* 850. The server 1010 forwards locally stored data to the device 1011 in a data flow 851.

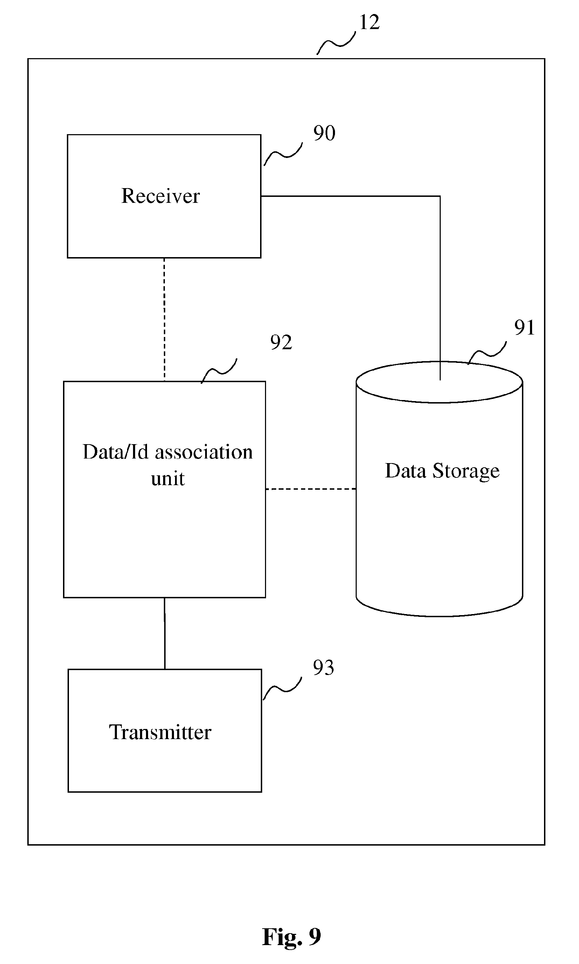

**Figure 9** illustrates the functional elements of a digital content storage management device, typically the server 12 or 1010, that includes:
- a receiver 90 adapted to start reception a digital content from a device in the same or another network;
- a data storage unit 91 adapted to store received digital content;
- an data/identifier association unit 92 adapted to associate the digital content with a resource identifier before an end of storage of the digital content, the resource identifier uniquely identifying the digital content stored on the server;
- an transmitter 93 adapted to send the resource identifier to the first device before the end of reception and storage of a digital content, so that the digital content may be requested.

According to different variants, the transmitter 93 is also adapted to send the digital content to a device (resp. another server), when it is requested by the device (resp. another server).

According a variant of the invention, the server also includes a unit adapted to check the address of a device requesting a digital content and to redirect the request, if the device belong to a network that have a local copy of the digital content (e.g. a device belonging to the network of the source of the digital content or of a server to (resp. from) which the digital content has previously been sent (resp. received).

Naturally, the invention is not limited to the embodiments previously described.

In particular, the invention is compliant with any type of server that is adapted to manage data received from a source, device or gateway and able to forward it to a requesting device. According to different embodiments, the server is for instance a video on demand server, a picture sharing server, or a social network server.

The implementations described herein may be implemented in, for example, a method, an apparatus, a software program or a system. Even if only discussed in the context of a single form of implementation (for example, discussed only as a method or a device), the implementation of features discussed may also be implemented in other forms (for example a program). The server and gateway may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device.

Additionally, the methods may be implemented by instructions being performed by a processor in the gateway, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced or got by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

The invention is not limited to management of video data, rather it also applies to management of any kind of digital contents, including multimedia data, including data files, audio data and/or video data and identification of any combination of multimedia data including video and audio data. According to the invention, the management of audio data is done on a similar way to management of video data.

According to a specific embodiment, the unique resource identifier corresponds to a URL. According to a variant, the unique resource identifier derives from a hash function (e.g. SHA-1, MD5, ...) of original data from a set including the digital content, other data source such as the DNS (Domain Name System), name of the server, a unique.

Embodiments of the invention may be applied to any kind of data network. It is specially well adapted for high delay links between the server and the content provider, such as mobile networks, networks with satellite links, low data rate networks, for example...

The invention is not limited to HTTP or HTTPS and is also compliant with other protocols such as FTP.

The invention can be implemented in miscellaneous devices or software tools; in particular, according to different embodiments, the invention is implemented in a gateway or a proxy between the source and the server.

As will be evident to one of skill in the art, implementations may produce a variety of signals formatted to carry data or control information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. Method of digital content storage management implemented in a first server (12), **characterized in that** the method comprises:
- starting reception (401) of a digital content from a first device and starting storage of the digital content;
- associating (402) the digital content with a resource identifier before an end of storage of the digital content;
- sending (403) the resource identifier to the first device before the end (404) of reception and storage of the digital content, so that the digital content may be requested from the first server;

2. Method according to claim 1, **characterized in that** it comprises:
- receiving a request (730) from a second device (133) to transfer the digital content associated with the resource identifier, the request being received before an end of storage of the digital content;
- sending the digital content (731) to the second device, the sending starting before the end of storage of the digital content;

3. Method according to claim 1, **characterized in that** it comprises:
- receiving a request (630, 730) from a third device (131, 133) to transfer the digital content associated with the resource identifier, the request being received before an end of storage of the digital content;
- checking if the third device belongs to a same local area network (1) as the first device (132, 11);
- if the third device belongs to a same local area network as the first device,
- then the first server (12) redirects (631) the request to the first device (131) or indicates that the digital content is present on the same local area network;
- otherwise the first server sends (731) the digital content to the third device(133), the sending starting before the end of storage of the digital content.

4. Method according to claim 3, **characterized in that** the first server checks IP addresses of the first device and the third device, the first device and the third device being considered as belonging to a same local area network if they have the same IP addresses or if their IP addresses share a common prefix.

5. Method according to any of claims 1 to 4, **characterized in that** it comprises:
- starting reception of the digital content (620) from the first device;
- forwarding the digital content (831) to a second server (1010);
- receiving a second resource identifier (833) associated with the second server;
- receiving a request from a fourth device to transfer the digital content associated with the resource identifier, the request being received before an end of storage of the digital content;
- checking if the fourth device belongs to a same autonomous system than the second server;
- if the fourth device belongs to the same autonomous system as the second server, then the first server redirects the request to the second server;

6. Method of digital content storage management implemented in a first device (20, 11-16) in a network, **characterized in that** the method comprises:
- starting (501) sending a digital content to a remote server;
- receiving (502) a resource identifier associated with the digital content before an end of sending of the digital content;

7. Method according to claim 6, **characterized in that** the first device forwards (503) the resource identifier to at least a second device of the network.

8. Method according to any of claim 6 and 7, **characterized in that** the first device:
- receives (632, 642) a request of the digital content from a requesting device in the local network;
- sends (633, 643) the digital content to the requesting device without forwarding the request to the remote server.

9. Management device (12) configured to manage a digital content storage, **characterized in that** the management device is configured to:
- start reception of a digital content from a first device and start storage of the digital content;
- associate the digital content with a resource identifier before an end of storage of the digital content;
- send the resource identifier to the first device before the end of reception and storage of a digital content, so that the digital content may be requested;

10. Management device according to claim 9, **characterized in that** it is configured to:
- receive a request from a second device to transfer the digital content associated with the resource identifier, the request being received before an end of storage of the digital content;
- send the digital content to the second device, the sending starting before the end of storage of the digital content;

11. Management device according to claim 9, **characterized in that** it is configured to:
- receive a request from a third device to transfer the digital content associated with the resource identifier, the request being received before an end of storage of the digital content;
- check if the third device belongs to a same local area network as the first device;
- if the third device belongs to a same local area network as the first device,
- then the management device redirects the request to the first device or indicates that the digital content is present on the same local area network;
- otherwise the management device sends the digital content to the third device, the sending starting before the end of storage of the digital content.

12. Management device according to claim 11, **characterized in that** it is configured to check IP addresses of the first device and third device, the first device and the third device being considered as belonging to a same local area network if they have the same IP addresses or if their IP addresses share a common prefix.

13. Management device according to any of claims 9 to 12, **characterized in that** it is configured to:
- start reception of the digital content from the first device;
- forward the digital content to a second server;
- receive a second resource identifier associated with the second server;
- receive a request from a fourth device to transfer the digital content associated with the resource identifier, the request being received before an end of storage of the digital content;
- check if the fourth device belongs to a same autonomous system than the second server;
- redirect the request to the second server if the fourth device belongs to the same autonomous system than the second server;

14. Sending device (20, 11-16) comprising a network interface, **characterized in that** it is configured to:
- start sending a digital content to a remote server;
- receive a resource identifier associated with the digital content before an end of sending of the digital content;

15. Device according to claim 14, **characterized in that** it is gateway or it includes a proxy.
